# EUROPÄISCHE PATENTSCHRIFT

(11) **EP 0 439 565 B1**
(45) Veröffentlichungstag und Bekanntmachung des Hinweises auf die Patenterteilung: **03.02.1993**
(21) Anmeldenummer: 90910743.5
(22) Anmeldetag: 04.07.1990
(51) Int. Cl.: B60R 21/13

(54) **INSASSENSCHUTZEINRICHTUNG FÜR KRAFTFAHRZEUGE**
SAFETY DEVICE FOR MOTOR VEHICLE PASSENGERS
DISPOSITIF DE SECURITE POUR PASSAGERS DE VEHICULES A MOTEUR

(30) Priorität: 18.08.1989 DE 3927265
(43) Veröffentlichungstag der Anmeldung: 07.08.1991
(73) Patentinhaber: Alfred Teves GmbH & Co. OHG, 51702 Bergneustadt (DE)
(72) Erfinder: REUBER, Gerhard, D-5962 Drolshagen (DE); BRAUN, Achim, D-5223 Nümbrecht (DE); STUPPERICH, Horst, D-5275 Bergneustadt (DE); KAHLERT, Manuela, D-5275 Bergneustadt (DE)
(74) Vertreter: Portwich, Peter
(86) Internationale Anmeldenummer: EP9001066
(87) Internationale Veröffentlichungsnummer: WO9102669

(56) Entgegenhaltungen:
- DE-A- 2 545 840
- DE-A- 3 723 378
- DE-A- 3 822 461
- DE-U- 9 001 215
- US-A- 3 292 726

## Beschreibung

Die Erfindung betrifft eine Insassenschutzeinrichtung für Kraftfahrzeuge mit einem Überrollbügel, der sowohl durch ein im Crash-Fall ausgelöstes Signal mittels elastischer Vorspannmittel in seine ausgestellte Endposition bringbar ist als auch mittels eines zusätzlichen Antriebes in die ausgestellte oder abgesenkte Endpostion verstellbar ist. Eine derartige Einrichtung ist aus der europäischen Patentanmeldung 309 686 bekannt. Diese Einrichtung hat den Nachteil eines großen Einbauraumbedarfs und bietet ferner funktionsbedingt keine Möglichkeit eine verstellbare Kopfstütze mit dem gleichen Antrieb zu betreiben.

Aus der US-PS 32 92 726 ist eine gattungsgemäße Insassenschutzeinrichtung bekannt, bei der ein unter nach oben gerichteter Vorspannung stehender Bügel bei einem Unfall ausgelöst wird und herausgeführt wird, um das Dach gegenüber Aufprallkräften abzustützen. Die Insassenschutzeinrichtung ist mit einem Sicherheitsgurt versehen, der auch einen elektrischen Schalter aufweisen kann, welcher zur Auslösung der Bewegung des Bügels dient. Der Bügel ist hinter dem Sitzpolster angeordnet, an dessen Rahmen auch die Sitzgurte verankert sind.

Aus der DE-OS 25 45 840 ist es bekannt, die Dachkonstruktion durch eine starre Überrollstütze dauerhaft abzustützen. Die Überrollstütze dient dabei gleichzeitig als Kopfstütze.

Die Erfindung geht daher aus von einer Insassenschutzeinrichtung der sich aus dem Oberbegriff des Hauptanspruchs ergebenden Gattung. Aufgabe der Erfindung ist es, eine derartige Einrichtung, insbesondere hinsichtlich ihrer Sicherheitsfunktion, zu verbessern und ihre allgemeine Einsatzfähigkeit zu fördern.

Diese Aufgabe wird durch die sich aus dem kennzeichnenden Teil des Anspruchs 1 ergebende Merkmalskombination gelöst. Die Erfindung besteht im Prinzip also darin, den aus der US-PS 32 92 726 bekannten Überrollbügel nicht nur mit einer Kopfstütze zu versehen, sondern die Bewegung des Überrollbügels imCrashfall gleichzeitig zur Straffung des Sitzgurtes mit auszunutzen. Auf diese Weise wird der für den Überrollbügel notwendige mechanische Aufwand in mehrfacher Hinsicht ausgenutzt. Die Erfindung ist nicht auf Fahrzeuge mit einem festen Dach beschränkt.

Durch die erfindungsgemäße Lösung wird eine Sicherheitseinrichtung geschaffen, welche sich insbesonders für Cabriolets eignet. Das Fahrzeug kann mit abgesenkter Überrollbügel-Kopfstützeneinheit gefahren werden, wodurch störende Windgeräusche vermieden werden, jedoch wird diese Einheit im Crash-Fall in Sekundenbruchteilen ausgefahren, wodurch zum einen die Kopfstütze positioniert ist und zum anderen der ausgefahrene Überrollbügel die Insassen im Falle eines Überschlages schützt. Bei einer bevorzugten Ausführungsform der Erfindung ist vorgesehen, daß der Überrollbügel in mindestens einer zwischen der abgesenkten und der ausgestellten Endposition liegenden Zwischenstellung einstellbar ist. Dadurch ist auch eine willkürliche Einstellung der Kopfstütze in eine für den Insassen komfortable Position möglich. Im Crash-Fall wird der zusätzliche Antrieb abgekoppelt und der Überrollbügel wird in seine ausgestellte Endposition ausgestoßen.

Einen für die Sicherheit der Fahrzeuginsassen besonderen Effekt erreicht man dadurch, daß Mittel vorgesehen sind, die bei Ausfahren des Überrollbügels in seine ausgestellte Endposition -also im Crash-Falleinen Sicherheitsgurt straffen.

Weitere vorteilhafte Merkmale, sowie die Funktion der Erfindung ergeben sich aus der nachstehenden Beschreibung bevorzugten Ausführungsform anhand der Zeichung.

Hierzu zeigt
Figur 1: ein erstes Ausführungsbeispiel der Erfindung,
Figur 2: einen Schnitt gemäß der Linie A-A von Figur 1,
Figur 3: einen Schnitt gemäß der Linie B-B der Figur 1,
Figur 4: Schnitt gemäß der Linie C-C von Figur 1,
Figur 5: Schnitt entlang der Linie D-D gemäß Figur 3,
Figur 6: ein zweites Ausführungsbeispiel der Erfindung,
Figur 7: eine dritte Ausfürungsform der Erfindung.

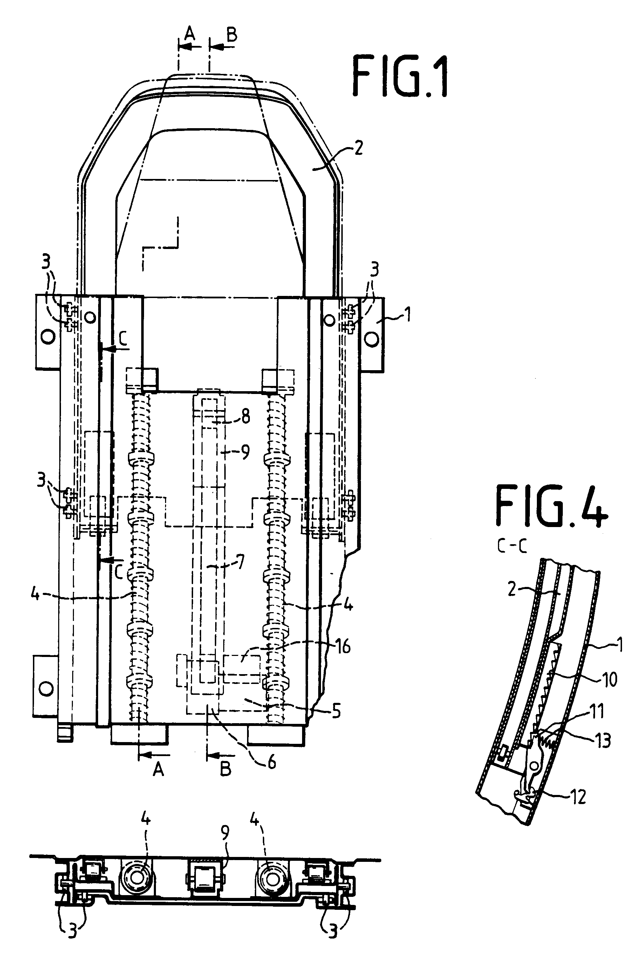

Gemäß Figur 1 weist die Sicherheitseinrichtung ein Gehäuse 1 aus Blechforteilen auf, welches mit dem Fahrzeugaufbau verschraubbar ist, und welches jeweils hinter einem Rücksitz eines viersitzigen Cabriolet's angeordnet wird. Im Gehäuse 1 ist der Überrollbügel 2 verschiebbar mittels Führungsrollen 3 gelagert. Der Überrollbügel ist durch zwei Druckfedern enthaltende Federelemente 4 in die ausgefahrene Stellung vorgespannt. Zwischen den beiden Federelementen 4 befindet sich die Antriebseinheit, welche sich aus dem Elektromotor 5, dem Getriebe 6, dem Zahnriemen 7 und dem Ritzel 8 zusammensetzt, wobei letzteres in Eingriff mit einer am Überrollbügel 2 vorgesehenen Verzahnung 9 steht. Der Elektromotor 5, das Getriebe 6 und das Ritzel 8 sind gehäusefest gelagert.

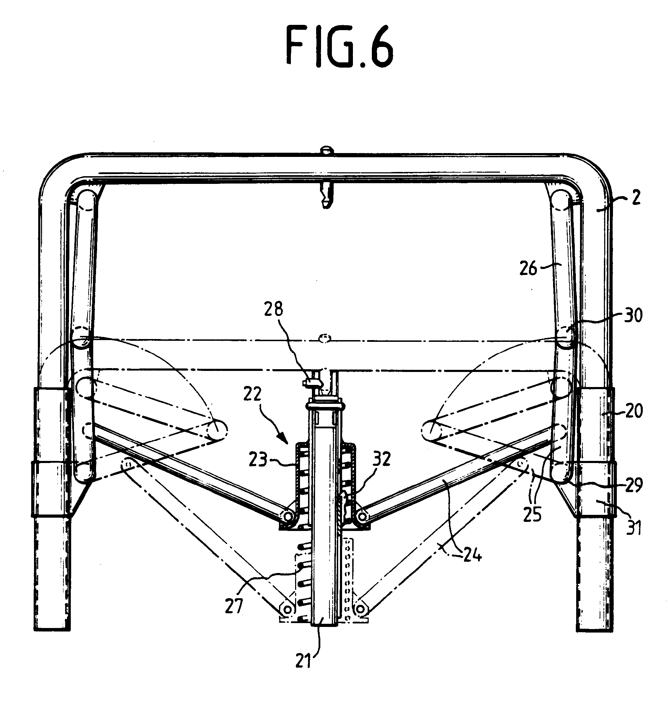

Wie aus Figur 4 hervorgeht, ist der Überrollbügel im Bereich der beiden seitlichen Führungen jeweils mit einer Zahnschiene 10 versehen, in welche eine gehäusefest gelagerte Sperrklinke 11 federbelastet eingreift. Die Sperrklinke 11 sichert den Überrollbügel gegen die Einwärtsbewegung. Die Sperrklinke 11 kann durch das Betätigungselement 12 gegen die Kraft der Feder 13 ausgelenkt werden, so daß beim willkürlichen Einfahren des Überrollbügels diese Bewegungsrichtung freigegeben wird. Durch die Sperrklinke 11 und die Zahnfeder 10 ist stets garantiert, daß der Überrollbügel in jeder Zwischen- stellung gegen eine Einwärtsbewegung in das Gehäuse 1 gesichert ist.

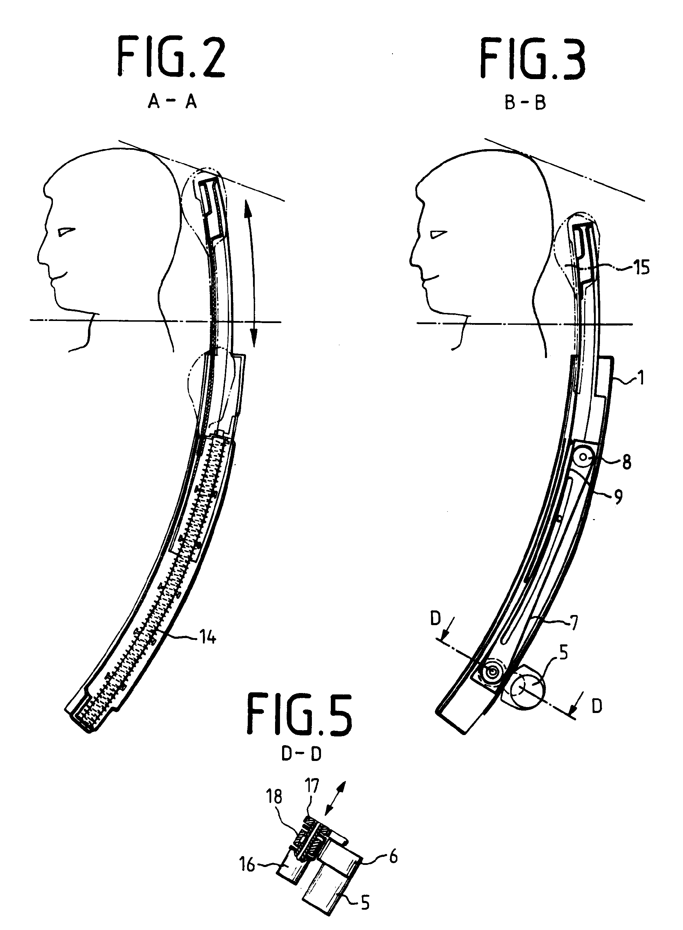

Wie den Figuren 2 und 3 zu entnehmen ist, bewegt sich der Überrollbügel auf einer gewölbten Führungsbahn. Durch diese Maßnahme wird ein besonders geringer Einbauraum benötigt. Entsprechend dem Wölbungsradius von Gehäuse 1 und Überrollbügel 2 verlaufen die Federführungsstangen 14, welche von den Druckfedern des Federelementes 4 umgeben sind.

In Figur 2 ist sowohl die komplett eingefahrene, als auch die maximal ausgefahrene Endstellung des Überrollbügels 2 dargestellt. Der Überrollbügel ist mit einem Kopfstützkissen 15 versehen, welches sich entsprechend der Körpergröße des betreffenden Fahrzeuginsassen mittels des Antriebes in eine komfortable Position einstellen läßt. Befinden sich beispielsweise bei einem viersitzigen Carbiolet keine Insassen auf den hinteren Sitzplätzen, so wird der Fahrer die hinteren Überrollbügel in die eingefahrene Position einstellen, wodurch lästige Windgeräusche vermieden werden.

Im Crash-Fall wird von den entsprechenden Crash-Sensoren ein Ansteuersignal generiert, welches den Hubmagneten 16 derart betätigt, daß der Zahnriemen 7 vom Getriebe 6 abgekopelt wird. Hierzu trennt der Hubmagnet 16 die Welle des Zahnriemenantriebs 18 vom Zahnrad 17, wobei zwischen der Welle und dem Zahnrad eine ansich bekannte Kupplung mit radial verschiebbarem Kugelelementen vorgesehen ist, welche in eingekupelten Zustand sowohl in die Welle, als auch in das Zahnrad 17 eingreifen.

Nach dem Abkoppeln der Getrieber 6 vom Zahnriemenantrieb 18 schießt der Überrollbügel angetrieben durch die Federelemente 4 aus dem Gehäuse 1 heraus in reine maximal ausgestellte Position. Das Kopfstützkissen 15 ist dabei so bemessen, daß er auch in ausgefahrener Überrollbügelposition den Kopf des betreffenden Insassen zu schützen vermag.

Nicht dargestellt ist eine mechanische Kopplung des Überrollbügels mit einem Befestigungspunkt des Sicherheitsgurtes, wodurch der Sicherheitsgurt bei herausfahren des Überrollbügels gestrammt wird. Die Kopplung geschieht dabei unter Zwischenschaltung einer Übersetzungsgetriebes, wodurch die Bewegung zum Anziehen des Sicherheitsgurtes auf ein geeignetes Maß eingstellbar ist.

Figur 6 zeigt eine Sicherheitseinrichtung mit geradliniger Hubbewegung, bei der die Kopfstützenkissen nicht dargestellt sind. Der U-förmige Überrollbügel 2 ist mit den beiden Schenkeln jeweils in einem Standrohr 20 teleskopartig geführt. Diese Standrohre 20 sind mit dem Fahrzeugaufbau starr verbunden. Zwischen den beiden Standrohren 20 ist die Führungssäule 21 des Antriebs 22 vorgesehen, der die Betätigungskraft über ein hülsenförmiges Übertragungelement 23 und die Hebel 24-26 auf den Überrollbügel 2 überträgt. Das Übertragungselement 23 ist axial verschiebbar auf der Führungsrolle 21 gelagert und durch die Feder 27 vertikal nach oben vorgespannt.

Im komplett eingefahrenen Zustand wird der Überrollbügel 2 durch die Verriegelungseinrichtung 28 arretiert. Diese Verriegelungseinrichtung 28 wird sowohl im Crash-Fall als auch bei willkürlich gesteuerter Überrollbügelverstellung gelöst.

In Figur 6 ist die komplett eingefahrene Sicherheitseinrichtung gestrichelt gezeichnet. Die symmetrisch aufgebaute Antriebs- und Anlenkmechanik besteht aus jeweils einem Hebel 24, welcher einerseits schwenkbar am Übertragungselement gelagert ist und andererseits zwischen der Lagerstelle 29 und dem Gelenk 30 des Hebels 25 an letztgenannten angelenkt ist. Die Lagerstelle 29 befindet sich an einem fest mit dem Stand- rohr 20 verbundenen Außenflansch 31; durch das am anderen Ende des Hebels 25 angeordnete Gelenk 30 ist der Hebel 25 mit einem Ende den Hebel 26 verbunden, welcher mit dem gegenüberliegenden Ende im jeweils zugeordneten Biegungsbereich des Überrollbügels 2 gelagert ist. Durch die entsprechende Wahl der Hebelabmessungen wird der Hub des Antriebs 22 in einen entsprechend größeren Überrollbügelhub übersetzt.

Zum Wiedereinziehen des Überrollbügels und zum willkürlichen positionieren weist der betrieb 22 hydraulische, pneumatische, mechanische oder elektromechanische Mittel auf -etwa gemäß dem in Figur 1-5 dargestellten Antrieb.

Der Antrieb 22 weist ferner einen Sperriegel 32 auf, welcher in entsprechende Ausnehmungen der Führungssäule 21 eingreift, und der eine Binwärtsbewegung des Überrollbügels verhindert. Dieser Sperriegel entspricht funktionsgemäß der Sperrklinke 11 und wird durch entsprechende Betätigungsmittel bei Bedarf (Einziehen des Überrollbügels) in Entriegelungsstellung gebracht.

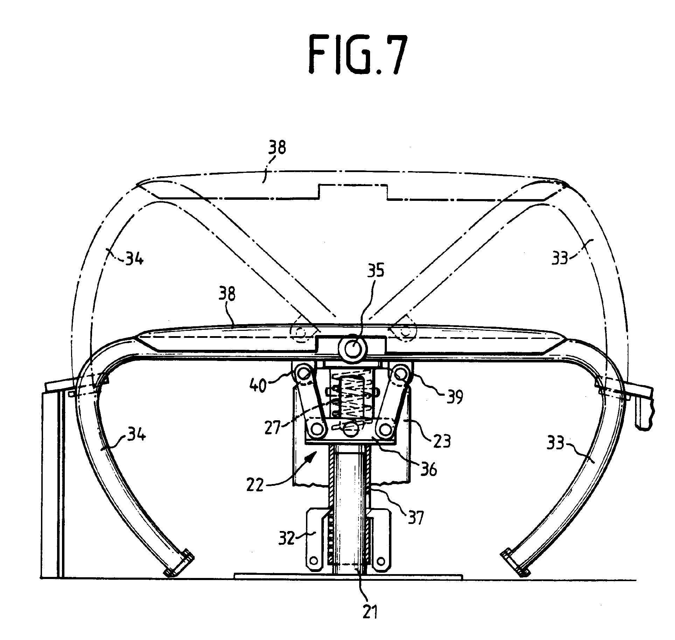

Die Ausführungsform gemäß Figur 7 besteht aus einem zweiteiligen Überrollbügel, anbei die beiden Teile 33, 34 um eine gemeinsame Achse 35 schwenkbar sind. Der betrieb 22 entspricht im wesenlichen dem in Figur 6 gezeigten und ist über die Lagerstellen 36, 37 mit den beiden Überrollbügelteilen 33 bzw. 34 verbunden. Das entsprechende Übertragungselement 23 ist auf der Führungssäule 21 gelagert und durch die Feder 27 in Ausstellrichtung vorgespannt. Die Feder 27 stützt sich an einem mit der Führungssäule 21 verbundenen Stützkörper 36 ab. Ein hülsenförmiger Abschnitt 37 des Übertragungselementes 23 ist mit Ausnehmungen versehen, in welchen Sperriegel 32 eingreifen um eine Einwärtsbewegung des Überrollbügels zu verhindern.

Auf den beiden Teilen 33, 34 des Überrollbügels kann ein Querträger 38 angeordnet sein, welcher zum einen einen zusätzlichen Insassenschutz bietet, falls das Fahrzeug bei einem Überschlag glücklich auf ein hervorstehendes Hinderniss trifft; andererseits kann es der Befestigung von Dachlasten (Ski-Träger, etc.) dienen. Der Querträger 38 ist sinnvoller Weise an einem der beiden Teile 34, 33 schwenkbar angelenkt, während er im anderen Teil verschiebbar -beispielsweise mittels einer Langloch-Stiftverbindug-, geführt ist.

### Bezugszeichenliste

- 1: Gehäuse
- 2: Überrollbügel
- 3: Führungsrollen
- 4: Federelement
- 5: Elektromotor
- 6: Getriebe
- 7: Zahnriemen
- 8: Ritzel
- 9: Verzahnung
- 10: Zahnschiene
- 11: Sperrklinke
- 12: Betätigungselement
- 13: Feder
- 14: Federführungsstange
- 15: Kopfstützenkissen
- 16: Hubmagnet
- 17: Zahnrad
- 18: Zahnriemenantrieb
- 20: Standrohr
- 21: Führungssäule
- 22: Antrieb
- 23: Übertragungselement
- 24: Hebel
- 25: Hebel
- 26: Hebel
- 27: Feder
- 28: Verriegelungseinrichtung
- 29: Lagerstelle
- 30: Gelenk
- 31: Außenflansch
- 32: Sperriegel
- 33: Teil
- 34: Teil
- 35: Achse
- 36: Stützkörper
- 37: Abschnitt
- 38: Querträger

## Patentansprüche

1. Insassenschutzeinrichtung für Kraftfahrzeuge mit einem Überrollbügel, der sowohl durch ein im Crash-Fall ausgelöstes Signal mittels elastischer Vorspannmittel in seine ausgestellte Endposition bringbar ist als auch mittels eines zusätzlichen Antriebes in die ausgestellte oder abgesenkte Endpostion verstellbar ist, wobei die Bewegung des Überrollbügels im wesentlichen in einer Ebene erfolgt, die senkrecht zur Fahrzeuglängsachse verläuft, dadurch **gekennzeichnet**, daß am Überrollbügel (2) mindestens eine Kopfstütze (15) vorgesehen ist und daß Mittel vorgesehen sind, die beim Ausfahren des Überrollbügels (2, 33, 34) in seine ausgestellte Endposition mindestens einen Sicherheitsgurt straffen.

2. Insassenschutzeinrichtung nach Anspruch 1, dadurch **gekennzeichnet,** daß der Überrollbügel (2, 33, 34) in mindestens eine zwischen der abgesenkten und der ausgestellten Endposition liegende Zwischenstellung einstellbar ist.

3. Insassenschutzeinrichtung nach einem der vorhergehenden Ansprüche, dadurch **gekennzeichnet,** daß der Überrollbügel (2, 33, 34) hinter der Rückenlehne der Fahrzeugrückbank vorgesehen sind.

4. Insassenschutzeinrichtung nach einen der vorhergehenden Ansprüche, dadurch **gekennzeichnet**, daß jedem Sitzplatz eine Überrollbügeleinheit zugeordnet ist.

5. Insassenschutzeinrichtung nach einen der vorhergehenden Ansprüche, dadurch **gekennzeichnet**, daß die Ebene, in der sich der Überrollbügel bewegt, gebogen ist.

6. Insassenschutzeinrichtung nach Ansprüch 5, dadurch **gekennzeichnet**, daß die konkave Seite der Ebene dem zugeordneten Fahrzeugsitz zugewandt ist.

7. Insassenschutzeinrichtung nach einem der vorhergehenden Ansprüche, dadurch **gekennzeichnet**, daß die Bewegung des Überrollbügels eine Hubbewegung mit gerader Bewegungsbahn ist.

8. Insassenschutzeinrichtung nach einem der vorhergehenden Ansprüche, dadurch **gekennzeichnet**, daß die Bewegung des Überrollbügels eine Hubbewegung mit gekrümmter Bewegungsbahn ist.

9. Insassenschutzeinrichtung nach einem der vorhergehenden Ansprüche, dadurch **gekennzeichnet**, daß die Bewegung des Überollbügels eine Schwenkbewegung um eine parallel zur Fahrzeuglängsachse verlaufende Schwenkachse ist.

10. Insassenschutzeinrichtung nach Anspruch 9, dadurch **gekennzeichnet**, daß zwei Überrollbügel vorgesehen sind, die um eine gemeinsame Schwenkachse (35) schwenkbar sind.

11. Insassenschutzeinrichtung nach einem der vorhergehenden Ansprüche, dadurch **gekennzeichnet**, daß mehrere Überrollbügel von einer gemeinsamen Antriebseinheit antreibbar sind.

12. Insassenschutzeinrichtung nach einem der vorhergehenden Ansprüche, dadurch **gekennzeichnet**, daß mehrere Überrollbügeleinrichtungen vorgesehen sind, die jeweils separat willkürlich verstellbar sind.

13. Insassenschutzeinrichtung nach einem der vorhergehenden Ansprüche, dadurch **gekennzeichnet**, daß die Überrollbügeleinheit im Fahrzeugsitz integriert ist.

14. Insassenschutzeinrichtung nach einem der vorhergehenden Ansprüche, dadurch **gekennzeichnet**, daß die Überrollbügeleinheit mehrere teleskopartig ineinander geschachtelte Hubelemente aufweist.

15. Insassenschutzeinrichtung nach einem der vorhergehenden Ansprüche, dadurch **gekennzeichnet**, daß der Überrollbügel durch eine Hebelmechanik (24, 25, 26) mit dem Antrieb verbunden ist.

## Claims

1. An occupant safety device for automotive vehicles with a roll bar which can be brought into its extended final operative position by means of elastic prestressing means by a signal being generated in the event of a crash and which can be adjusted into the extended or lowered final position by means of an additional drive, the movement of the roll bar being performed substantially in a plane which runs perpendicular relative to the longitudinal axis of the vehicle,
**characterized** in that at least one head-rest (15) is provided at the roll bar (2), and in that means are provided which tighten at least one safety belt when the roll bar (2, 33, 34) is being moved into its extended final position.

2. An occupant safety device as claimed in claim 1,
**characterized** in that the roll bar (2, 33, 34) is adjustable to assume at least one intermediate position between the lowered and the extended final operative position.

3. An occupant safety device as claimed in any one of the preceding claims,
**characterized** in that the roll bar (2, 33, 34) is provided behind the back of the rear seat bench of the vehicle.

4. An occupant safety device as claimed in any one of the preceding claims,
**characterized** in that one roll bar unit is associated with each one of the seats.

5. An occupant safety device as claimed in any one of the preceding claims,
**characterized** in that the plane in which the roll bar moves is curved.

6. An occupant safety device as claimed in claim 5,
**characterized** in that the concave side of the said plane faces the associated vehicle seat.

7. An occupant safety device as claimed in any one of the preceding claims,
**characterized** in that the movement of the roll bar is a lifting movement with a straight path of motion.

8. An occupant safety device as claimed in any one of the preceding claims,
**characterized** in that the movement of the roll bar is a lifting movement with a curved path of motion.

9. An occupant safety device as claimed in any one of the preceding claims,
**characterized** in that the movement of the roll bar is a swinging movement about an axis of swing running parallel to the longitudinal axis of the vehicle.

10. An occupant safety device as claimed in claim 9,
**characterized** in that two roll bars are provided which are swingable about a common axis of swing (35).

11. An occupant safety device as claimed in any one of the preceding claims,
**characterized** in that a plurality of roll bars is drivable by a common driving unit.

12. An occupant safety device as claimed in any one of the preceding claims,
**characterized** in that a plurality of roll bar units is provided which are adjustable separately at option.

13. An occupant safety device as claimed in any one of the preceding claims,
**characterized** in that the roll bar unit is integrated in the vehicle seat.

14. An occupant safety device as claimed in any one of the preceding claims,
**characterized** in that the roll bar unit is comprised of a plurality of lifting elements being telescoped into one another.

15. An occupant safety device as claimed in any one of the preceding claims,
**characterized** in that the roll bar is coupled to the drive by a lever mechanism (24, 25, 26).

## Revendications

1. Dispositif de protection pour occupant d'un véhicule automobile, comprenant un arceau de sécurité qui est agencé aussi bien de façon à pouvoir être amené dans sa position déployée extrême à l'aide de moyens à précontrainte élastique sous l'effet d'un signal émis en cas de collision que de façon à pouvoir être placé dans la position déployée extrême ou la position abaissée extrême à l'aide d'un entraînement supplémentaire, le déplacement de cet arceau de sécurité s'effectuant essentiellement suivant une surface à deux dimensions qui s'étend perpendiculairement à l'axe longitudinal du véhicule, caractérisé en ce qu'au moins un appuie-tête (15)'est prévu sur l'arceau de sécurité (2) et en ce qu'il est prévu des moyens qui tendent au moins une ceinture de sécurité lors de l'expulsion de l'arceau de sécurité (2, 33, 34) dans sa position déployée extrême.

2. Dispositif de protection pour occupant suivant la revendication 1, caractérisé en ce que la position de l'arceau de sécurité (2, 33, 34) peut être réglée dans au moins une position intermédiaire située entre sa position abaissée extrême et sa position déployée extrême.

3. Dispositif de protection pour occupant suivant l'une des revendications précédentes, caractérisé en ce que l'arceau de sécurité (2, 33, 34) est prévu derrière le dossier du siège arrière du véhicule.

4. Dispositif de protection pour occupant suivant l'une des revendications précédentes, caractérisé en ce qu'un ensemble à arceau de sécurité est associé à chaque siège.

5. Dispositif de protection pour occupant suivant l'une des revendications précédentes, caractérisé en ce que la surface à deux dimensions suivant laquelle l'arceau de sécurité se déplace est cintrée.

6. Dispositif de protection pour occupant suivant la revendication 5, caractérisé en ce que la face concave de la surface à deux dimensions est tournée vers le siège associé du véhicule.

7. Dispositif de protection pour occupant suivant l'une des revendications précédentes, caractérisé en ce que le déplacement de l'arceau de sécurité est un déplacement dans un sens et dans l'autre à trajectoire rectiligne.

8. Dispositif de protection pour occupant suivant l'une des revendications précédentes, caractérisé en ce que le déplacement de l'arceau de sécurité est un déplacement dans un sens et dans l'autre à trajectoire courbe.

9. Dispositif de protection pour occupant suivant l'une des revendications précédentes, caractérisé en ce que le déplacement de l'arceau de sécurité est un déplacement de pivotement autour d'un axe de pivotement parallèle à l'axe longitudinal du véhicule.

10. Dispositif de protection pour occupant suivant la revendication 9, caractérisé en ce qu'il est prévu deux arceaux de sécurité qui sont agencés de façon pouvoir pivoter autour d'un axe commun de pivotement (35).

11. Dispositif de protection pour occupant suivant l'une des revendications précédentes, caractérisé en ce que plusieurs arceaux de sécurité sont agencés de façon à pouvoir être entraînés par une unité commune d'entraînement.

12. Dispositif de protection pour occupant suivant l'une des revendications précédentes, caractérisé en ce qu'il est prévu plusieurs dispositifs à arceau de sécurité dont la position de chacun peut être réglée à volonté d'une manière séparée.

13. Dispositif de protection pour occupant suivant l'une des revendications précédentes, caractérisé en ce que l'ensemble à arceau de sécurité est monté dans le siège du véhicule de façon à en faire partie intégrante.

14. Dispositif de protection pour occupant suivant l'une des revendications précédentes, caractérisé en ce que l'ensemble à arceau de sécurité comprend plusieurs éléments à déplacement dans un sens et dans l'autre, emboîtés l'un dans l'autre d'une manière télescopique.

15. Dispositif de protection pour occupant suivant l'une des revendications précédentes, caractérisé en ce que l'arceau de sécurité est relié à l'entraînement par l'intermédiaire d'un mécanisme à leviers (24, 25, 26).
